# EUROPEAN PATENT APPLICATION

(11) **EP 4 711 811 A1**
(43) Date of publication of application: **18.03.2026**
(21) Application number: 25196323.7
(22) Date of filing: 18.08.2025
(51) Int. Cl.: G01S 7/53, G01S 7/54, G01S 15/00, G01S 15/08, G01S 15/42, G01S 15/46, G01S 15/87, G01S 15/931, G01S 7/56

(54) **DRIVING ASSISTANCE DEVICE**

(30) Priority: 12.09.2024 JP 2024157996
(71) Applicant: AISIN CORPORATION, Aichi 448-8650 (JP)
(72) Inventor: NAKABAYASHI, Atsushi, Kariya, Aichi 448-8650 (JP)
(74) Representative: TBK

(57) **Abstract**

A driving assistance device (1) includes: a plurality of detection sensors (9A to 9L) that are respectively provided in different locations of a vehicle (2) and are in such a positional relationship that the plurality of detection sensors are able to transmit probe waves to surroundings of the vehicle and receive from each other received waves including reflected waves of the probe waves reflected by an object (15) around the vehicle; a surrounding image display unit (10) configured to display a surrounding image (51) indicating the surroundings of the vehicle on a display device (4); a first object position specifying unit (10) configured to specify a position of the object by triangulation using a first detection distance calculated by a detection sensor serving as a transmission source receiving the reflected wave of the probe wave as a direct wave and a second detection distance calculated by another detection sensor different from the detection sensor serving as the transmission source receiving the reflected wave of the probe wave as an indirect wave; a second object position specifying unit (10) configured to specify the position of the object based on the first detection distance; an object determination unit (10) configured to divide the surroundings of the vehicle into a plurality of areas for each direction with a current position of the vehicle as a center, and determine whether the object specified by the first object position specifying unit and the second object position specifying unit is located in each of the plurality of divided areas; and a warning image display unit (10) configured to display, in the surrounding image, a warning image indicating that the object is located in an area in which the object is determined to be located by the object determination unit. When the position of the object is specified in any of the plurality of areas by the first object position specifying unit, the warning image display unit does not display the warning image based on a specification result of the second object position specifying unit under a predetermined condition for an area different from an area in which the object is specified to be located by the first object position specifying unit even when the object is specified to be located only by the second object position specifying unit.

## Description

### TECHNICAL FIELD

This disclosure relates to a driving assistance device that assists driving of a vehicle.

### BACKGROUND DISCUSSION

In the related art, as a safety device for ensuring safety during traveling or parking of a vehicle, a technique is known in which a detection sensor for detecting a surrounding object (for example, a person, a bicycle, another vehicle, a wall, or the like) such as an ultrasonic sensor, a millimeter wave radar sensor, or a LiDAR sensor is disposed on the vehicle, and a warning is given to a driver or automatic control of the vehicle is performed based on a detection result of the detection sensor.

Such a detection sensor outputs a probe wave, such as an ultrasonic wave, a millimeter wave, or an infrared ray, measures a time until the output probe wave is reflected by the object and returns, and detects a distance to the object. When a plurality of detection sensors are disposed on the vehicle, an indirect wave can be used in addition to a direct wave, and the object can be detected more accurately. The "direct wave" refers to a received wave when a detection sensor that transmits a probe wave and a detection sensor that receives a reflected wave of the probe wave from the object as a received wave are the same. In contrast, the "indirect wave" refers to a received wave when a detection sensor that transmits a probe wave is different from a detection sensor that receives a reflected wave of the probe wave from the object as the received wave. For example, Japanese Patent No. 7167675 discloses a technique in which a plurality of detection sensors are disposed on a vehicle and a position of an object is detected by triangulation using a detection distance by a direct wave and a detection distance by an indirect wave.

Here, in the detection of the position of the object using the triangulation as disclosed in Japanese Patent No. 7167675 (paragraphs 0021 to 0043) (Reference 1), both the detection of the object using the direct wave and the detection of the object using the indirect wave can be performed, and a detectable range is limited because it is necessary to establish the triangulation. In contrast, the position of the object can be detected only by the direct wave. Since the detection of the position of the object only by the direct wave is established by the sensor alone, a detectable range is wide as compared with the detection of the position of the object using triangulation, but there is a feature that it is difficult to specify a specific position of the object even when the distance to the object can be measured.

Based on this feature, in an area in which it is detected that the object is not located in the detection of the position of the object using triangulation, it may be detected that the object is located therein in the detection of the position of the object using only the direct wave. In this case, various situations are assumed, and it is extremely difficult to accurately determine whether the object is actually present in the corresponding area. Therefore, it may be difficult to accurately give a warning about the object.

A need thus exists for a driving assistance device capable of issuing a more accurate warning to a user when issuing a warning about an object whose position is specified using a detection sensor.

### SUMMARY

According to an aspect of this disclosure, a driving assistance device includes: a plurality of detection sensors that are respectively provided in different locations of a vehicle and are in such a positional relationship that the plurality of detection sensors are able to transmit probe waves to surroundings of the vehicle and receive from each other received waves including reflected waves of the probe waves reflected by an object around the vehicle; a surrounding image display unit configured to display a surrounding image indicating the surroundings of the vehicle on a display device; a first object position specifying unit configured to specify a position of the object by triangulation using a first detection distance calculated by a detection sensor serving as a transmission source receiving the reflected wave of the probe wave as a direct wave and a second detection distance calculated by another detection sensor different from the detection sensor serving as the transmission source receiving the reflected wave of the probe wave as an indirect wave; a second object position specifying unit configured to specify the position of the object based on the first detection distance; an object determination unit configured to divide the surroundings of the vehicle into a plurality of areas for each direction with a current position of the vehicle as a center, and determine whether the object specified by the first object position specifying unit and the second object position specifying unit is located in each of the plurality of divided areas; and a warning image display unit configured to display, in the surrounding image, a warning image indicating that the object is located for an area in which the object is determined to be located by the object determination unit, in which when the position of the object is specified in any of the plurality of areas by the first object position specifying unit, the warning image display unit does not display the warning image based on a specification result of the second object position specifying unit under a predetermined condition for an area different from an area in which the object is specified to be located by the first object position specifying unit even when the object is specified to be located only by the second object position specifying unit.

The "surrounding image indicating surroundings of the vehicle" may be a captured image obtained by actually capturing images of the surroundings of the vehicle, an image obtained by processing the captured image, or a created CG image instead of the actual captured image. The created image does not necessarily have to be an image that faithfully reproduces the surroundings of the vehicle.

According to the driving assistance device disclosed here having the above configuration, when a warning about an object is issued in units of areas, since the display of the warning image is restricted in a situation in which the presence of the object is suspicious for an area in which the object is not located in the detection of the position of the object using triangulation and the object is located in the detection of the position of the object using only the direct wave, it is possible to issue a more accurate warning to the user.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic configuration diagram of a vehicle according to the present embodiment;
Fig. 2 is a diagram illustrating an arrangement example of ultrasonic sensors in a front surface of the vehicle;
Fig. 3 is a diagram illustrating an arrangement example of ultrasonic sensors in a side surface of the vehicle;
Fig. 4 is a diagram illustrating a method for specifying a specific position (a relative position with respect to the vehicle) of an object using triangulation;
Fig. 5 is a diagram illustrating a triangulation area and a direct wave area;
Fig. 6 is a diagram illustrating a case in which triangulation is not established;
Fig. 7 is a diagram illustrating a method for detecting a position of an object using only a direct wave;
Fig. 8 is a block diagram illustrating a configuration of a driving assistance device according to the present embodiment;
Fig. 9 is a flowchart of a driving assistance processing program according to the present embodiment;
Fig. 10 is a diagram illustrating areas when surroundings of the vehicle is divided;
Fig. 11 is a diagram illustrating a display example of a warning image for the object;
Fig. 12 is a diagram illustrating an example in which display of the warning image is restricted when the object can be specified only by specifying the position of the object by the direct wave;
Fig. 13 is a diagram illustrating an example in which display of the warning image is restricted when the object can be specified only by specifying the position of the object by the direct wave; and
Fig. 14 is a diagram illustrating an example in which display of the warning image is restricted when the object can be specified only by specifying the position of the object by the direct wave.

### DETAILED DESCRIPTION

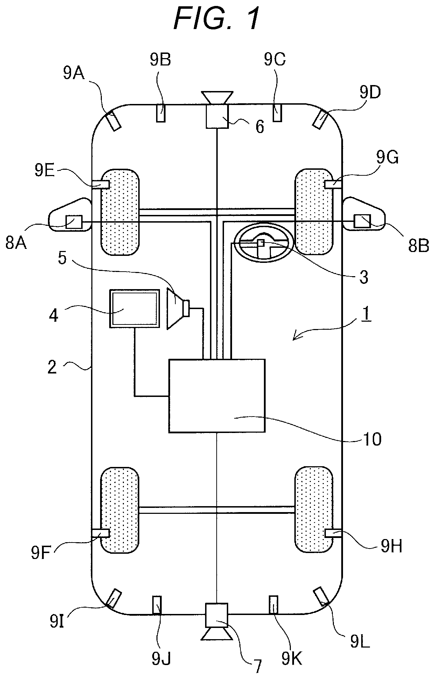

Hereinafter, a driving assistance device according to a specific embodiment disclosed here will be described in detail with reference to the drawings. First, a vehicle 2 equipped with a driving assistance device 1 according to the present embodiment will be described below. Fig. 1 is a schematic configuration diagram of the vehicle 2 according to the present embodiment.

Here, the vehicle 2 may be, for example, an automobile (an internal combustion engine automobile) using an internal combustion engine (an engine, or the like) as a drive source, an automobile (an electric automobile, a fuel cell automobile, or the like) using an electric motor (a motor or the like) as a drive source, or an automobile (a hybrid automobile) using both of the internal combustion engine and the electric motor as a drive source. Regardless of a type of the vehicle, the vehicle 2 may be an ordinary vehicle, a large truck for commercial use, a bus, construction machinery, or the like. In the following description, a four-wheeled automobile is used, and a two-wheeled or three-wheeled vehicle may be used.

The vehicle 2 is a vehicle capable of manual driving traveling in which the vehicle travels based on a driving operation of a user, as well as assisted traveling using autonomous driving assistance in which the vehicle travels automatically without the driving operation of the user.

The autonomous driving assistance may be performed only under a specific situation such as when parking or leaving a garage, may be performed for all road sections, or may be performed only while the vehicle travels on a specific road section (for example, a highway with a gate (manned or unmanned, paid or free) at a boundary). In the following description, an autonomous driving section in which the autonomous driving assistance of the vehicle is performed includes a parking lot in addition to all road sections including general roads and highways. The autonomous driving assistance is performed only in a situation in which the user selects to perform the autonomous driving assistance (for example, turns on an autonomous driving start button) and it is determined that traveling by the autonomous driving assistance is possible. In contrast, the vehicle 2 may be a vehicle that can only perform assisted traveling by the autonomous driving assistance. Alternatively, the vehicle 2 may perform assisted traveling by the autonomous driving assistance only for traveling to a parking space when the vehicle is to be parked (that is, parking assistance).

In vehicle control in the autonomous driving assistance according to the present embodiment, for example, a current position of the vehicle, a lane in which the vehicle travels, and positions of surrounding obstacles are detected at any time, and the vehicle control of a steering, a drive source, and a brake is automatically performed such that the vehicle travels along a generated travel trajectory at a speed according to a speed plan generated in the same manner. In particular, when parking assistance is performed, the vehicle control is automatically performed in which the parking space, which is a target into which the vehicle is to be parked, and a surrounding situation are confirmed using detection results of a sensor or a camera, a parking trajectory to the parking space is calculated, the vehicle enters the parking space along the calculated parking trajectory, and the parking is completed. However, only a steering operation may be automatically performed, and the drive source and the brake may be controlled based on a manual operation. Alternatively, only guidance into the parking space may be performed, and a parking operation into the parking space may be manually performed by the user.

While the vehicle control of the steering, the drive source, the brake, and the like is automatically performed, an occupant of the vehicle can cancel the autonomous driving assistance at any timing by an own intention, and can stop the vehicle by executing a brake operation. When a scene around the vehicle (which may be an actual scene or a virtual scene of CG) is displayed on an in-vehicle display as will be described later and there is an object which needs attention for the user, such as another vehicle or a pedestrian, around the vehicle when the autonomous driving assistance is performed, a warning image indicating the presence of the object is superimposed and displayed in the scene, and the occupant of the vehicle can visually recognizing the display to perform the brake operation if necessary to stop the vehicle by stopping the autonomous driving assistance.

As illustrated in Fig. 1, the vehicle 2 includes an operation unit 3 that receives an operation from the occupant, a liquid crystal display 4 that displays a bird's-eye view image or an overhead image of the surroundings of the vehicle and other information related to driving assistance to the occupant, a speaker 5 that outputs audio guidance related to the driving assistance, a front camera 6, a rear camera 7, and side cameras 8A and 8B that capture images of the surroundings of the vehicle, ultrasonic sensors 9A to 9L that is a type of detection sensor that detects obstacles around the vehicle, and a driving assistance electronic control unit (ECU) 10 that performs various types of arithmetic processing based on received information. The driving assistance device 1 includes the driving assistance ECU 10 and other components.

Hereinafter, the components included in the vehicle 2 will be described. First, the operation unit 3 is disposed, for example, on a front surface of a steering wheel and includes operation buttons that are operated when the autonomous driving assistance is started. By operating the operation unit 3, the user can switch between the manual driving traveling in which the vehicle travels based on the driving operation of the user, and the assisted traveling by the autonomous driving assistance in which the vehicle automatically travels without the driving operation of the user. The operation unit 3 may include a touch panel provided on a front surface of the liquid crystal display 4. A microphone and a voice recognition device may be further included.

The liquid crystal display 4 is a type of display device, is provided on an instrument panel of the vehicle 2, and displays a bird's-eye view image or an overhead image of the surroundings of the vehicle generated by performing viewpoint conversion and synthesis processing on captured images captured by cameras including the front camera 6, the rear camera 7, and the side cameras 8A and 8B during the execution of autonomous driving assistance. When there is an object that needs attention for the user, such as another vehicle or a pedestrian, around the vehicle, a warning image indicating the presence of the object is also displayed in the bird's-eye view image or the overhead image. The liquid crystal display 4 may also be used in a navigation device.

The speaker 5 is provided on the instrument panel of the vehicle 2 and outputs a guidance voice or a warning sound related to the driving assistance. In particular, when the object approaches the vehicle, the warning sound for the object is output in a mode enabling a direction in which the object is located to be known. The speaker 5 may also be used in the navigation device.

The front camera 6 is, for example, an image-capturing device including a camera using a solid-state imaging element such as a CCD and is provided, for example, above a front bumper of the vehicle 2 or on a back side of a rear-view mirror with an optical axis direction thereof being directed to the front in the traveling direction of the vehicle.

The rear camera 7 is also an image-capturing device including a camera using a solid-state imaging element such as a CCD and is provided, for example, in the vicinity of an upper center of a license plate attached to the rear of the vehicle 2 with an optical axis direction thereof being directed to the rear of the vehicle.

The side cameras 8A and 8B are also image-capturing devices each including a camera using a solid-state imaging element such as a CCD and are attached to, for example, left and right side mirrors of the vehicle 2 with optical axis directions thereof being directed to lateral sides of the vehicle.

Then, the driving assistance ECU 10 performs the viewpoint conversion and the synthesis processing on the captured images captured by the cameras including the front camera 6, the rear camera 7, and the side cameras 8A and 8B to generate the bird's-eye view image and the overhead image of the surroundings of the vehicle. During the execution of the autonomous driving assistance, by performing image recognition processing on the captured image, a partition line, a parking frame line, and an obstacle (another vehicle, a pedestrian, a bicycle, a wall, a guard rail, and other structures) around the vehicle are detected, and the autonomous driving assistance is executed based on a detection result thereof. In particular, when parking assistance is performed, the detection result of the obstacle obtained by the cameras is also used to confirm the parking space and the surrounding situation.

The ultrasonic sensors 9A to 9L are disposed at predetermined intervals on a front portion, a rear portion, and side portions of the vehicle, and transmit ultrasonic waves as probe waves to the surroundings of the vehicle 2 and receive reflected waves of the transmitted probe waves reflected by objects around the vehicle, thereby detecting the objects that reflect the probe waves. Specifically, the ultrasonic sensors 9A to 9L are of a type of distance measurement sensor that can detect a distance (distance measurement value) to the object that reflects the probe wave by measuring a time from the transmission to the reception. The ultrasonic sensors 9A to 9L can generate an output signal (including the distance to the detected object) corresponding to a reception result of the received wave and output the output signal to a control unit. Examples of an object serving as a detection target by the ultrasonic sensors 9A to 9L include an obstacle that needs to be avoided when the vehicle 2 travels, such as a person, a bicycle, another vehicle, and a wall, and an obstacle that forms the parking space. As the distance measurement sensor, a millimeter wave sensor or a laser sensor may be used instead of the ultrasonic sensor.

Installation positions and the installation directions of the respective ultrasonic sensors 9A to 9L can be set as appropriate. In the present embodiment, to set a detection range of the object to all orientations including the front, rear, and left and right directions of the traveling direction of the vehicle 2, the ultrasonic sensors 9A to 9D are provided on a front side of the vehicle 2 being directed to the traveling direction such that a transmission direction of the probe wave is forward in the traveling direction of the vehicle. The ultrasonic sensors 9E and 9F are provided on a left side surface of the vehicle 2 being directed to a left direction such that the transmission direction of the probe wave is leftward in the traveling direction of the vehicle. The ultrasonic sensors 9G and 9H are provided on a right side surface of the vehicle 2 being directed to a right direction such that the transmission direction of the probe wave is rightward in the traveling direction of the vehicle. The ultrasonic sensors 9I to 9L are provided on a rear surface of the vehicle 2 being directed to a direction opposite to the traveling direction such that the transmission direction of the probe wave is toward the rear of the vehicle. The ultrasonic sensors 9A to 9L have substantially the same height from a ground surface.

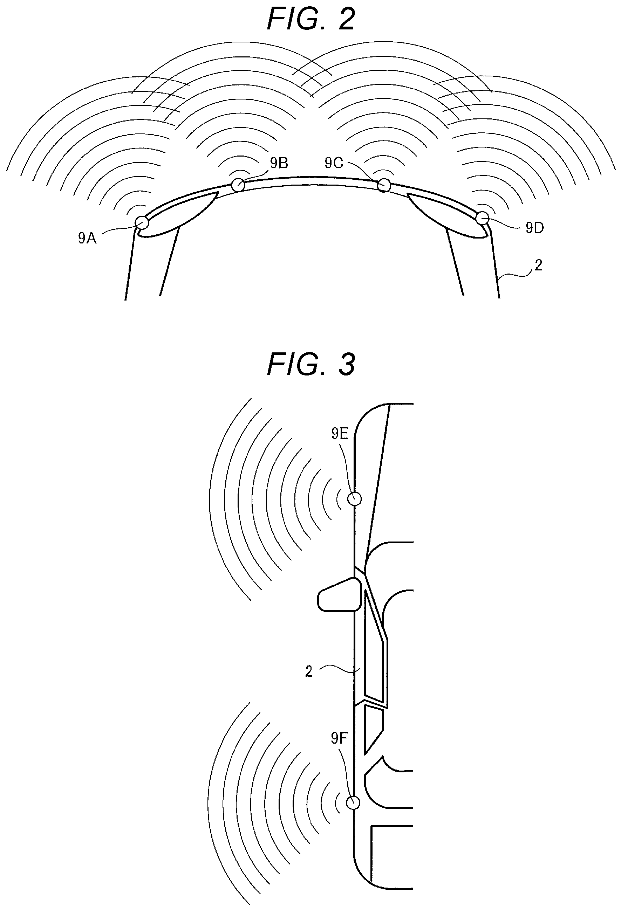

In particular, when the ultrasonic sensors 9A to 9D are described as an example, as illustrated in Fig. 2, it is desirable that the ultrasonic sensors 9A to 9D are provided at different positions around the front bumper on the front surface of the vehicle 2 or the front grille above the front bumper at equal intervals without deviation in a left-right direction, and can transmit the probe wave to a wider range in front of the vehicle (that is, the detectable range of the object is set as the wider range).

Specifically, as illustrated in Fig. 2, the ultrasonic sensor 9A is provided in the vicinity of a left front corner of the vehicle 2 in an orientation in which the transmission direction of the probe wave is inclined slightly to the left direction from the traveling direction of the vehicle 2 to transmit the probe wave to the left front of the vehicle 2. The ultrasonic sensor 9B is provided slightly to the left of a center line of the vehicle 2 in a direction in which the transmission direction of the probe wave is directed to the traveling direction of the vehicle to transmit the probe wave in front of the vehicle 2, particularly on the left side. The ultrasonic sensor 9C is provided slightly to the right of the center line of the vehicle 2 in a direction in which the transmission direction of the probe wave is directed to the traveling direction of the vehicle to transmit the probe wave in front of the vehicle 2, particularly on the right side. The ultrasonic sensor 9D is provided in the vicinity of a right front corner of the vehicle 2 in an orientation in which the transmission direction of the probe wave is inclined slightly to the right direction from the traveling direction of the vehicle 2 to transmit the probe wave to the right front of the vehicle 2. The ultrasonic sensor 9A and the ultrasonic sensor 9D, and the ultrasonic sensor 9B and the ultrasonic sensor 9C are arranged symmetrically with respect to the vehicle center line in a plan view. Although not illustrated, the same applies to the ultrasonic sensors 9I to 9L on the rear surface of the vehicle 2 in a vertically symmetrical manner.

In contrast, as illustrated in Fig. 3, the ultrasonic sensor 9E and the ultrasonic sensor 9F on the side are provided to transmit the probe wave in a direction intersecting the traveling direction of the vehicle 2 by 90 degrees. As described above, since the number of sensors provided on the side range is less than that on the front side or the rear side of the vehicle, there are areas in which the object cannot be directly detected by the ultrasonic sensors 9E and 9F. However, in these areas, the presence or absence of the object and the position of the object can be estimated from a detection history of the object by the ultrasonic sensors 9A to 9L. Although not illustrated, the same applies to the ultrasonic sensor 9G and the ultrasonic sensor 9H on the right side surface of the vehicle 2 in a horizontally symmetrical manner.

In the present embodiment, among the ultrasonic sensors 9A to 9L, in particular, the ultrasonic sensors 9A to 9D on the front surface of the vehicle 2 and the ultrasonic sensors 9I to 9L on the rear surface of the vehicle 2 are provided at positions at which reflected waves can be received as indirect waves between adjacent sensors. Therefore, it is possible to determine not only the distance to the object but also a specific position (a relative position with respect to the vehicle) of the object using triangulation by receiving direct waves and indirect waves as received waves. Although the ultrasonic sensors 9E to 9H on the lateral sides cannot receive indirect waves because they are provided apart from one another, a specific position (a relative position with respect to the vehicle) of the object can be specified by triangulation using a measured distance of a previous position, a measured distance of a current position, and a movement distance therebetween as the vehicle moves.

Hereinafter, in particular, the ultrasonic sensors 9A to 9D disposed on the front surface of the vehicle 2 will be described in more detail including the detection mode of the object.

Here, among the ultrasonic sensors 9A to 9D, the ultrasonic sensor 9A and the ultrasonic sensor 9B have a positional relationship in which at least the received waves can be received from each other. That is, the ultrasonic sensor 9B is in a positional relationship in which the probe wave transmitted from the ultrasonic sensor 9A can be received as the indirect wave. Similarly, the ultrasonic sensor 9A is a positional relationship in which the probe wave transmitted from the ultrasonic sensor 9B can be received as the indirect wave. The ultrasonic sensor 9B and the ultrasonic sensor 9C are also in a positional relationship in which received waves can be received from each other. That is, the ultrasonic sensor 9C is in a positional relationship in which the probe wave transmitted from the ultrasonic sensor 9B can be received as the indirect wave. Similarly, the ultrasonic sensor 9B is in a positional relationship in which the probe wave transmitted from the ultrasonic sensor 9C can be received as the indirect wave. The ultrasonic sensor 9C and the ultrasonic sensor 9D are also in a positional relationship in which received waves can be received from each other. That is, the ultrasonic sensor 9D is in a positional relationship in which the probe wave transmitted from the ultrasonic sensor 9C can be received as the indirect wave. Similarly, the ultrasonic sensor 9C is in a positional relationship in which the probe wave transmitted from the ultrasonic sensor 9D can be received as the indirect wave.

On the other hand, combinations of ultrasonic sensors other than the above are basically in a positional relationship in which received waves cannot be received from each other, and for example, the ultrasonic sensor 9C and the ultrasonic sensor 9D are in a positional relationship in which the probe wave transmitted by the ultrasonic sensor 9A cannot be received as the indirect wave. The ultrasonic sensor 9D is in a positional relationship in which the probe wave transmitted by the ultrasonic sensor 9B cannot be received as the indirect wave. The ultrasonic sensor 9A is in a positional relationship in which the probe wave transmitted by the ultrasonic sensor 9C cannot be received as the indirect wave. The ultrasonic sensor 9A and the ultrasonic sensor 9B are in a positional relationship in which the probe wave transmitted by the ultrasonic sensor 9D cannot be received as the indirect wave.

The expression "the received wave can be received" means that the received wave can be received to the extent that the distance to the object can be effectively detected. In contrast, the expression "the received wave cannot be received" includes not only the inability to receive any received wave, but also the reception at a weak reception strength to the extent that the distance to the object cannot be effectively detected.

In the present embodiment, the ultrasonic sensors 9A to 9D can specify not only the distance to the object but also the specific position of the object (a relative position with respect to the vehicle) by receiving the direct wave and the indirect wave as the received waves. The "direct wave" and the "indirect wave" are defined as follows. For example, among the received waves received by the ultrasonic sensor 9A, a received wave caused by a reflected wave of the probe wave transmitted from the ultrasonic sensor 9A from the object is referred to as a "direct wave". The direct wave is a received wave when the ultrasonic sensor 9A receives, as the received wave, the reflected wave from the object of the probe wave transmitted from the ultrasonic sensor 9A. That is, the "direct wave" is a received wave when an ultrasonic sensor that transmits a probe wave and an ultrasonic sensor that receives a reflected wave of the probe wave from the object as a received wave are the same. In contrast, among the received waves received by the ultrasonic sensor 9A, a received wave caused by a reflected wave from the object of a probe wave transmitted from an ultrasonic sensor (the ultrasonic sensor 9B in the present embodiment) other than the ultrasonic sensor 9A is referred to as an "indirect wave". The indirect wave is a received wave when the ultrasonic sensor 9A receives, as the received wave, a reflected wave from the object of the probe wave transmitted from the ultrasonic sensor 9B. That is, the "indirect wave" refers to a received wave when an ultrasonic sensor that transmits a probe wave is different from an ultrasonic sensor that receives a reflected wave of the probe wave from the object as the received wave.

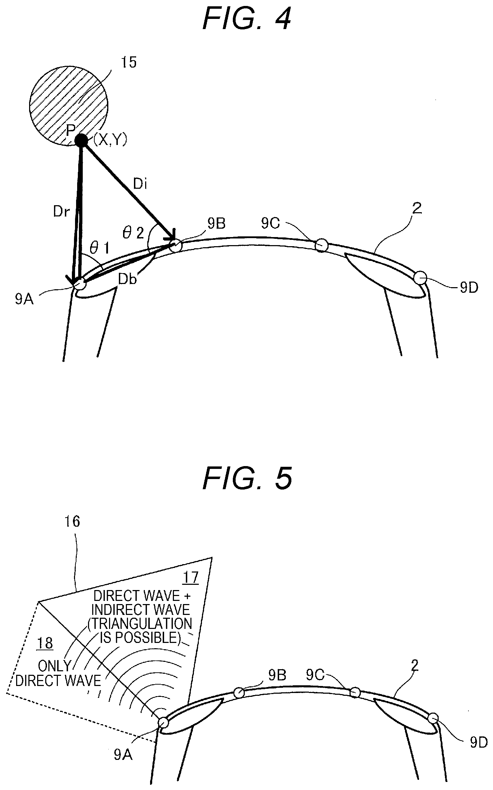

As a method for specifying a specific position (a relative position with respect to the vehicle) of an object 15 when the object 15 is present in front of the vehicle as illustrated in Fig. 4, a case in which a position P (X, Y) of the object 15 is specified by the probe wave transmitted from the ultrasonic sensor 9A will be described. First, the ultrasonic sensor 9A transmits the probe wave and receives the direct wave which is a reflected wave reflected by the object 15 to measure a distance Dr from the ultrasonic sensor 9A to the position P. The ultrasonic sensor 9B receives, as the indirect wave, the reflected wave reflected by the object of the probe wave transmitted from the ultrasonic sensor 9A to measure a sum of the distance Dr from the ultrasonic sensor 9A to the position P and a distance Di from the ultrasonic sensor 9B to the position P. A distance Db between the ultrasonic sensor 9A and the ultrasonic sensor 9B is a fixed value for each vehicle, and can be acquired by inputting the distance Dd to a device side in advance. As a result, based on the lengths of the three sides Dr, Di, and Db, angles θ1 and θ2 therebetween can be calculated, and specific position coordinates (X, Y) (a relative position with respect to the vehicle) of the position P of the object 15 can also be specified using triangulation. In the above example, the case in which the position P (X, Y) of the object 15 is specified by the probe wave transmitted from the ultrasonic sensor 9A has been described, but the position P (X, Y) of the object 15 can be similarly specified by a probe wave transmitted from another ultrasonic sensor (for example, the ultrasonic sensor 9B) at a position at which the probe wave reaches the object 15.

However, the detection of the object using the triangulation by the direct wave and the indirect wave as illustrated in Fig. 4 can be performed only in a partial range within a detection range in which the ultrasonic sensors 9A to 9D can detect the object. For example, when taking the case in which the position of the object is detected by the probe wave transmitted from the ultrasonic sensor 9A as an example, when there is a detection range 16 in which the object can be detected by the probe wave transmitted from the ultrasonic sensor 9A as illustrated in Fig. 5, since the reflected wave can be received only by the ultrasonic sensor 9A in an area at the left end, the object can only be detected by the direct wave. In contrast, since the ultrasonic sensor 9B can also receive the reflected wave in another areas, the detection of the object using the triangulation by the direct wave and the indirect wave is enabled. Hereinafter, an area in which the position of the object can be specified by triangulation using the detection distances of the direct wave and the indirect wave is referred to as a triangulation area 17, and an area in which the object needs to be detected only by a detection distance of the direct wave is referred to as a direct wave area 18. Although Fig. 5 illustrates an example in which the position of the object is detected by the probe wave transmitted from the ultrasonic sensor 9A, the triangulation area 17 and the direct wave area 18 are also present when detecting the position of the object by the probe waves transmitted from the other ultrasonic sensors 9B to 9D.

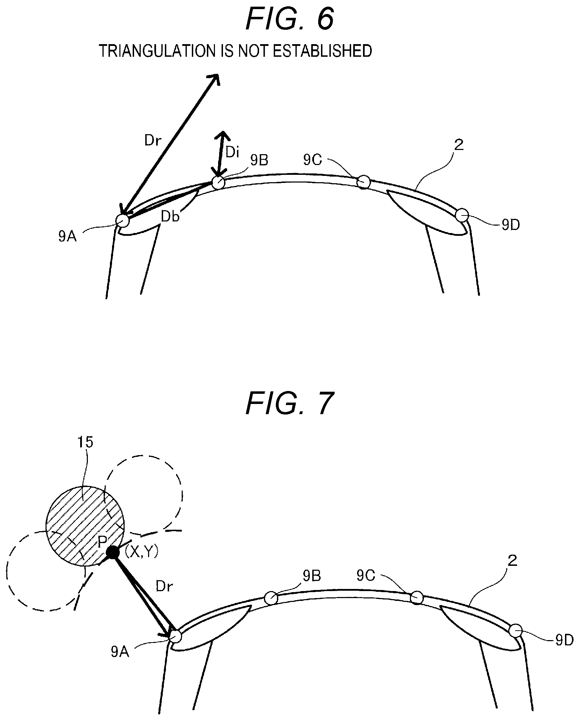

In the detection of the object using the triangulation, the position of the object may not be detected not only when the direct wave or the indirect wave cannot be received but also when triangulation points cannot be calculated even when the direct wave and the indirect wave are received. For example, as illustrated in Fig. 6, when a difference between the distance Dr and the distance Di is large, the triangulation points may not be connected, and the triangulation may not be established. Particularly when detecting a portion in the vicinity of a corner of the object or a surface in a depth direction, the distance difference as described above tends to easily occur. Therefore, it is not always possible to perform the detection of the object using the triangulation in the triangulation area 17, and even when the detection of the object using the triangulation cannot be performed in the triangulation area 17, the object may be present.

As illustrated in Fig. 4, there is a feature that a specific position of the object can be detected in the detection of the object using the triangulation, but a detailed position (a relative position with respect to the vehicle) of the object cannot be specified in the detection of the object only by the direct wave. For example, as illustrated in Fig. 7, when the object 15 is present on the left front side of the vehicle, the ultrasonic sensor 9A transmits the probe wave and receives the direct wave which is a reflected wave reflected by the object 15 to measure the distance Dr from the ultrasonic sensor 9A to the position P. However, the position P may be located at any position on an arc having a radius Dr around the ultrasonic sensor 9A. Therefore, as will be described later, when the surroundings of the vehicle is divided into a plurality of areas and it is determined whether the object is located in each area, it may be detected that the object is also present in an area different from an area in which the object is actually present in the detection of the object only by the direct wave.

As described above, there is a region (the direct wave area 18) around the vehicle, in which the detection of the object using the triangulation cannot be performed based on the arrangement relationship of the ultrasonic sensors 9A to 9D, and even when in a region in which the object can be detected, the object may not be detected by triangulation because the triangulation is not established. Even in such a case, it is often possible to perform the detection of the object only by the direct wave, but since it is difficult to specify the specific position in the detection of the object only by the direct wave as described above, it may be detected that the object is also present in an area different from an area in which the object is actually present. As a result, when an area in which the object is specified to be located is unconditionally set as a warning target in the detection of the object only by the direct wave, the warning may be issued to an area in which the object is not actually present. To prevent these problems, in the present embodiment, although the presence of the object cannot be confirmed in the detection of the object using the triangulation, a warning may be restricted for the area in which an obstacle is specified to be located in the detection of the object only by the direct wave. More details will be described below.

The driving assistance ECU 10 is an electronic control unit that performs various types of processing related to the autonomous driving assistance. For example, the current position of the vehicle, the lane in which the vehicle travels, and the positions of surrounding obstacles are detected at any time, and the vehicle control of a steering, a drive source, and a brake is performed such that the vehicle travels along a generated travel trajectory at a speed according to a speed plan generated in the same manner. In particular, when parking assistance is performed, the vehicle control is performed in which the parking space, which is a target into which the vehicle is to be parked, and a surrounding situation are confirmed using detection results of the front camera 6, the rear camera 7, the side cameras 8A and 8B, and the ultrasonic sensors 9A to 9L, a parking trajectory to the parking space is calculated, the vehicle enters the parking space along the calculated parking trajectory, and the parking is completed. The liquid crystal display 4 displays a scene around the vehicle (which may be an actual scene or a virtual scene of CG), and when there is an object which needs attention for the user around the vehicle, such as another vehicle or a pedestrian, the warning image indicating the presence of the object is also superimposed and displayed in the scene. The driving assistance ECU 10 is connected to the operation unit 3, the liquid crystal display 4, the speaker 5, the front camera 6, the rear camera 7, the side cameras 8A and 8B, and the ultrasonic sensors 9A to 9L described above via an in-vehicle network such as a CAN. The driving assistance ECU 10 is also connected to various sensors such as a vehicle speed sensor, an acceleration sensor, a gyro sensor, a steering sensor, and a shift position sensor mounted on the vehicle 2, a navigation device as an in-vehicle device, and the like. A detailed configuration of the driving assistance ECU 10 will be described later.

In addition to the components illustrated in Fig. 1, the vehicle 2 includes basic components as the vehicle 2. However, only a configuration related to control of the autonomous driving assistance and control related to the configuration will be described.

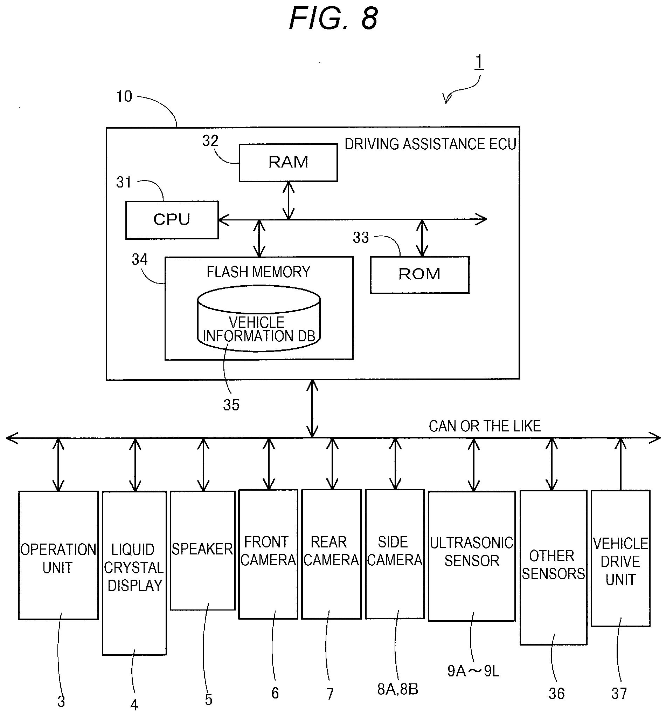

Next, the driving assistance ECU 10 of the driving assistance device 1 included in the vehicle 2 will be described in detail. Fig. 8 is a block diagram illustrating a configuration of the driving assistance device 1 according to the present embodiment.

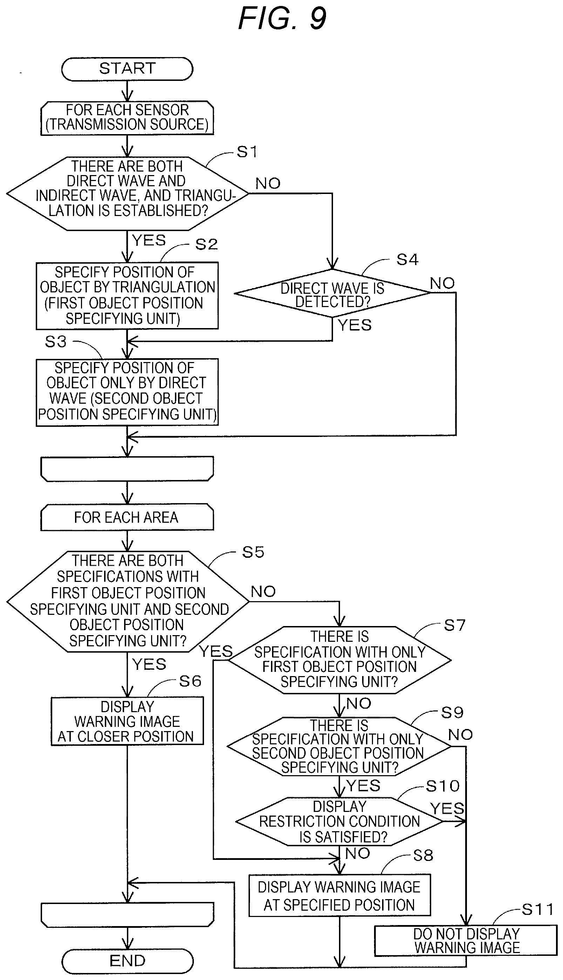

As illustrated in Fig. 8, the driving assistance electronic control unit (ECU) 10 is an electronic control unit that performs overall control of the driving assistance device 1, and includes a CPU 31 serving as an arithmetic device and a control device and internal storage devices such as a RAM 32 that is used as a working memory when the CPU 31 performs various types of arithmetic processing and that stores travel trajectory data when the travel trajectory is calculated, a ROM 33 in which a driving assistance processing program (see Fig. 9) to be described later is recorded in addition to control programs, and a flash memory 34 that stores a program read from the ROM 33. The driving assistance ECU 10 includes various units as processing algorithms. For example, a surrounding image display unit displays a surrounding image indicating the surroundings of the vehicle on the liquid crystal display 4. A first object position specifying unit specifies the position of the object by the triangulation using a first detection distance calculated by the ultrasonic sensors 9A to 9L, which serve transmission sources, receiving the reflected waves of the probe waves as the direct waves and a second detection distance calculated by the other ultrasonic sensors 9A to 9L different from the transmission sources receiving the reflected waves of the probe waves as the indirect waves. A second object position specifying unit specifies the position of the object based on the first detection distance. An object determination unit divides the surroundings of the vehicle into a plurality of areas for each direction with a current position of the vehicle as a center, and determines whether the object specified by the first object position specifying unit and the second object position specifying unit is located in each of the plurality of divided areas. A warning image display unit displays a warning image indicating that the object is located in the surrounding image for an area in which the object is determined to be located by the object determination unit. That is, the driving assistance ECU 10 is an example of the surrounding image display unit, the first object position specifying unit, the second object position specifying unit, the object determination unit, and the warning image display unit.

The driving assistance ECU 10 is also connected to various sensors 36 for detecting behaviors of the vehicle, such as a vehicle speed sensor, a wheel speed sensor, an acceleration sensor, a gyro sensor, a steering sensor, and a shift position sensor, and a drive unit 37 of the vehicle, such as a steering wheel, a brake, an accelerator, and a transmission. A current behavior of the vehicle is detected based on detection results of these sensors 36, and the autonomous driving assistance for the vehicle 2 is performed by controlling the drive unit 37. As specific contents of the autonomous driving assistance, for example, a current position of the vehicle, a lane in which the vehicle travels, and positions of surrounding obstacles are detected at any time, and vehicle control of a steering wheel, a drive source, and a brake is performed such that the vehicle travels along a generated travel trajectory at a speed according to a similarly generated speed plan. However, only a steering operation may be automatically performed, and the drive source and the brake may be controlled based on a manual operation.

The flash memory 34 includes vehicle information DB 35, and the vehicle information DB 35 stores various types of information on the vehicle 2. For example, installation positions (heights from the ground surface and positions in a left-right direction) and detection axes (optical axes with the camera) of the cameras and the ultrasonic sensors 9A to 9L provided in the vehicle 2, a total length, a vehicle width, a wheelbase, a minimum turning radius, and the like are stored. Such these pieces of information are input in advance by the occupant or a person on a vehicle manufacturer side.

Next, the driving assistance processing program executed by the driving assistance ECU 10 in the driving assistance device 1 having the above-described configuration will be described with reference to Fig. 9. Fig. 9 is a flowchart of the driving assistance processing program according to the present embodiment. Here, the driving assistance processing program is a program that is executed after an accessory power supply (ACC power supply) of the vehicle 2 is turned on, detects the object (for example, a person, a bicycle, another vehicle, a wall, or the like) around the vehicle 2 using the ultrasonic sensors 9A to 9L, and issues a warning about the detected object. The program illustrated in the flowchart in Fig. 9 is stored in the RAM 32 or the ROM 33 included in the driving assistance device 1 and is executed by the CPU 31.

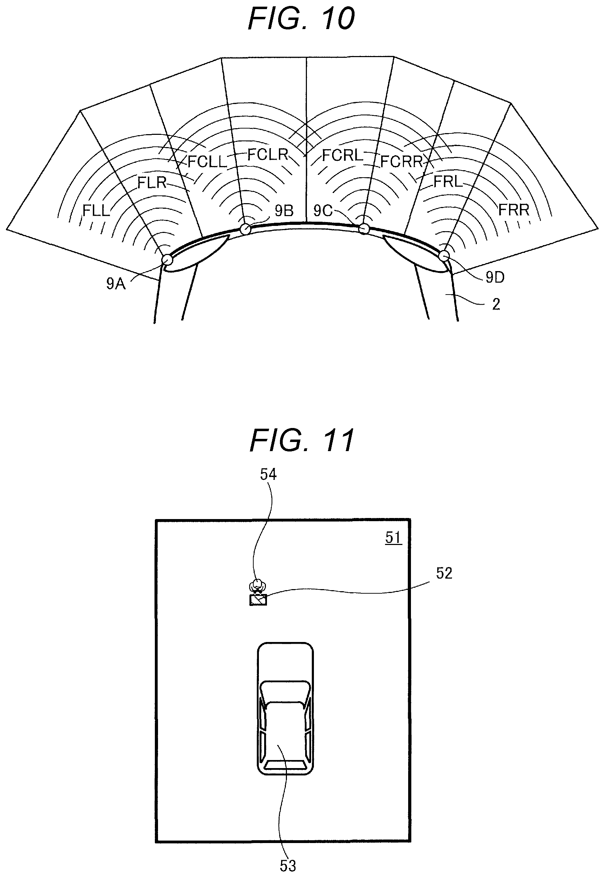

Here, the warning about the object according to the present embodiment is executed for each area obtained by dividing the surroundings of the vehicle. For example, Fig. 10 is a diagram illustrating divisions of areas in front of the vehicle, and the areas are referred to as "FLL", "FLR", "FCLL", "FCLR", "FCRL", "FCRR", "FRL", and "FLL" in order from the left. However, the divisions of the areas illustrated in Fig. 10 are an example, and the number of divisions of the areas and a size of each area can be changed as appropriate. The divisions may be made coarser or finer. Although not illustrated in the drawings, areas on the sides and the rear of the vehicle are similarly divided.

The processing of the following step (hereinafter abbreviated as S) 1 to S4 is processing of specifying the position of the object using the detection results of the ultrasonic sensors 9A to 9L included in the vehicle 2, and is performed for all the ultrasonic sensors 9A to 9L included in the vehicle 2. For example, hereinafter, a case in which the position of the object is specified by the probe wave transmitted from the ultrasonic sensor 9A will be described as an example. The probe waves are always transmitted from the ultrasonic sensors 9A to 9L at regular time intervals, and the following processing after S1 is repeatedly executed until an end condition (for example, the ACC is turned off) is satisfied.

First, in S1, the CPU 31 determines whether the ultrasonic sensor 9A (a first sensor) receives the reflected wave of the probe wave transmitted by the ultrasonic sensor 9A as the direct wave, whether the ultrasonic sensor 9B (a second sensor) receives the reflected wave of the probe wave transmitted from the ultrasonic sensor 9A as the indirect wave, and whether the triangulation is established. Although the detection of the object using the triangulation has already been described with reference to Fig. 4, the detection is performed using the distance Dr (a first detection distance) from the ultrasonic sensor 9A to the position P calculated based on a time from the transmission of the probe wave to the reception of the direct wave, the sum of the distance Dr from the ultrasonic sensor 9A to the position P and the distance Di (a second detection distance) from the ultrasonic sensor 9B to the position P, which is detected from a time from the transmission of the probe wave to the reception of the indirect wave, and the distance Db between the ultrasonic sensor 9A and the ultrasonic sensor 9B. Here, if either the direct wave or the indirect wave cannot be detected, the triangulation is not established, and even when both the direct wave and the indirect wave are detected, the triangulation may not be established when the difference between the distance Dr and the distance Di is large as illustrated in Fig. 6. For example, particularly when detecting a portion in the vicinity of a corner of the object or a surface in a depth direction, the distance difference as described above tends to easily occur.

Then, if it is determined that the ultrasonic sensor 9A receives the reflected wave of the probe wave transmitted by the ultrasonic sensor 9A as the direct wave, the ultrasonic sensor 9B receives the reflected wave of the probe wave transmitted from the ultrasonic sensor 9A as the indirect wave, and the triangulation is established between the distance Dr and the distance Di (YES in S1), the processing proceeds to S2. On the other hand, if it is determined that at least one of the direct wave and the indirect wave cannot be received, or when it is determined that the triangulation is not established between the distance Dr and the distance Di even when the direct wave and the indirect wave can be received (NO in S1), the processing proceeds to S4.

In S2, the CPU 31 specifies specific position coordinates (X, Y (a relative position with respect to the vehicle)) of the position P of the object using a result of the established triangulation. In particular, when the object has a width, a range in which the object is located is also specified by a coordinate sequence. When a plurality of objects are detected, position coordinates of each of the plurality of detected objects are specified. The details of the triangulation have already been described with reference to Fig. 4, and thus will be omitted.

Subsequently, in S3, the CPU 31 specifies the specific position coordinates (X, Y (a relative position with respect to the vehicle) of the position P of the object using only a detection result by the direct wave. However, although the distance from the ultrasonic sensor 9A to the position P of the object can be specified in the detection of the object only by the direct wave, it is difficult to specify detailed position coordinates of the object. Therefore, the position of the object is specified in an arc shape as illustrated in Fig. 7.

The specification of the position of the object in S2 is an example of the first object position specifying unit that specifies the position of the object by the triangulation using the first detection distance calculated by the detection sensor, which serves as the transmission source, receiving the reflected wave of the probe wave as the direct wave and the second detection distance calculated by another detection sensor different from the transmission source receiving the reflected wave of the probe wave as the indirect wave. In contrast, the specification of the position of the object in S4 is an example of the second object position specifying unit that specifies the position of the object based on the first detection distance.

In S4, the CPU 31 determines whether the ultrasonic sensor 9A receives the reflected wave of the probe wave transmitted by the ultrasonic sensor 9A as the direct wave.

Then, if it is determined that the ultrasonic sensor 9A receives the reflected wave of the probe wave transmitted by the ultrasonic sensor 9A as the direct wave (YES in S4), the processing proceeds to S3. Then, the specific position coordinates of the position P of the object are specified using only the detection result by the direct wave (S3). On the other hand, if it is determined that the direct wave cannot be received (NO in S4), it is estimated that there is no object to be warned, and the processing ends without specifying the position of the object.

Next, the processing of S1 to S4 is also performed on the probe wave transmitted from the ultrasonic sensor 9B included in the vehicle 2 to specify the position of the object. The same applies to the ultrasonic sensors 9C to 9L. Then, after the processing of S1 to S4 is executed for all of the ultrasonic sensors 9A to 9L, the processing proceeds to S5.

However, since the ultrasonic sensors 9E to 9H disposed on the side surfaces of the vehicle 2 cannot detect the object by the indirect wave, the position of the object is specified by only the direct wave. However, for the ultrasonic sensors 9E to 9H, when distance measurement values are continuously acquired during the movement of the vehicle 2, the position of the object can also be calculated by triangulation using a distance measurement value of the previous position, a distance measurement value of a current position, and a movement distance therebetween. For the ultrasonic sensor 9B located in the vicinity of the center of the vehicle, since the ultrasonic sensor 9A and the ultrasonic sensor 9C located on the left and right sides can receive the indirect wave, the specification of the position of the object by triangulation based on the indirect wave received by the ultrasonic sensor 9A and the specification of the position of the object by triangulation based on the indirect wave received by the ultrasonic sensor 9C in S2 are executed. The same applies to the ultrasonic sensors 9C, 9J, and 9K.

Then, after the position of the object is specified by the processing of S1 to S4, processing of S5 and subsequent steps is executed. The processing of S5 and subsequent steps is executed for each of the plurality of areas (see Fig. 10) obtained by dividing the surroundings of the vehicle, and the processing ends after the processing is executed for all of the areas.

First, in S5, the CPU 31 determines whether it is possible to specify that the object is located by the specification of the position of the object using the triangulation in S2 (hereinafter, referred to as triangulation position specification) and it is also possible to specify that the object is located by the specification of the position of the object using only the direct wave in S4 (hereinafter, referred to as direct wave position specification) for an area to be processed among the plurality of areas obtained by dividing the surroundings of the vehicle. When a shape of the object can be specified, it is determined that the object is located in the area to be processed when even only a small part of the object is included in the area to be processed. A condition may be that a part of the object equal to or larger than a threshold (for example, 10% or more of the whole) is included.

Then, if it is determined that it is possible to specify that the object is located in the area to be processed by the triangulation position specification in S2 and it is possible to specify that the object is located in the area to be processed by the direct wave position specification in S4 (YES in S5), the processing proceeds to S6. On the other hand, if it is determined that it is possible to specify that the object is located in the area to be processed by only one of the triangulation position specification and the direct wave position specification or it is impossible to specify the position of the object by any of the methods (NO in S5), the processing proceeds to S7.

In S6, since it is estimated that the object is located in the area to be processed among the plurality of areas obtained by dividing the surroundings of the vehicle, the CPU 31 displays the warning image on the liquid crystal display 4 to notify the user of the presence of the object in a predetermined target area. Specifically, the warning image is superimposed and displayed in the surrounding image of the vehicle indicating the surroundings of the vehicle, which is displayed on the liquid crystal display 4, at a position at which the object is specified. In addition to the display of the warning image, a warning sound may be output.

When the position of the object specified by the triangulation position specification in S2 is different from the position of the object specified by the direct wave position specification in S4, a warning is issued based on a specification result obtained by specifying a position closer to a host vehicle. That is, the warning image is superimposed and displayed at the position of the object specified as being closest to the host vehicle. However, since the position of the object specified by the triangulation is generally more accurate, the warning may be issued based on the position of the object specified by the triangulation position specification in S2. Alternatively, the warning may be issued based on both the position of the object specified by the triangulation position specification in S2 and the position of the object specified by the direct wave position specification in S4.

Hereinafter, the processing of S6 will be described with a specific example. For example, Fig. 11 is a display example of a warning image 52 when an overhead image 51 is displayed on the liquid crystal display 4 as the surrounding image of the vehicle. As illustrated in Fig. 11, the warning image 52 is superimposed on the overhead image 51. A host vehicle image 53 indicating a position of the host vehicle is also displayed in the overhead image 51, and the user is allowed to grasp the position of the object (a pedestrian in the example illustrated in Fig. 11) 54 based on a positional relationship between the host vehicle image 53 and the warning image 52. For example, in the example illustrated in Fig. 11, it is determined that the object 54 is present in the "FLR" for the host vehicle, and the warning image 52 is displayed in an area corresponding to the "FLR" in the overhead image 51. A shape of the warning image 52 can be set as appropriate. For example, the warning image 52 is an image having a screen shape (a wall shape) along the detected position of the object 54 (a reflection position of the probe wave) as illustrated in Fig. 11, more specifically, a screen shape displayed from one edge to the other edge of an area in an orientation facing the host vehicle. The user can grasp that the object 54 is present in front of the host vehicle by visually recognizing the overhead image 51. When it is specified that the object 54 is located across a plurality of areas, the warning image 52 is displayed in the plurality of corresponding areas.

Although a method for generating the overhead image 51 is well known and thus detailed description thereof will be omitted, the overhead image 51 is generated by performing viewpoint conversion and synthesis processing on the captured images captured by the front camera 6, the rear camera 7, and the side cameras 8A and 8B. The warning image may be displayed in a bird's-eye view image viewed obliquely from below instead of the overhead image. The overhead image or the bird's-eye view image is continuously displayed on the liquid crystal display 4, for example, during traveling regardless of whether the warning image is displayed.

Then, in S7, the CPU 31 determines whether it is possible to specify that the object is located in the area to be processed by the triangulation position specification in S2.

If it is determined that it is possible to specify that the object is located in the area to be processed by the triangulation position specification in S2 (YES in S7), the processing proceeds to S8. On the other hand, if it is determined that it is impossible to specify that the object is located in the area to be processed by the triangulation position specification in S2 (NO in S7), the processing proceeds to S9.

In S8, since it is estimated that the object is located in the area to be processed among the plurality of areas obtained by dividing the surroundings of the vehicle, the CPU 31 displays the warning image 52 on the liquid crystal display 4 as illustrated in Fig. 11 to notify the user of the presence of the object in a predetermined target area. Specifically, the warning image 52 is superimposed and displayed in the surrounding image of the surroundings of the vehicle displayed on the liquid crystal display 4 at the position at which the object is specified by the triangulation position specification in S2. In addition to the display of the warning image, a warning sound may be output. Since the details are the same as those of S6, the description thereof will be omitted.

In S9, the CPU 31 determines whether it is possible to specify that the object is located in the area to be processed by the direct wave position specification in S4.

Then, if it is determined that it is possible to specify that the object is located in the area to be processed by the direct wave position specification in S4 (YES in S9), the processing proceeds to S10. On the other hand, if it is determined that it is impossible to specify that the object is located in the area to be processed even by the direct wave position specification in S4, that is, the position of the object cannot be specified by any of the triangulation position specification method and the direct wave position specification method (NO in S9), the display of the warning image 52 is not performed (S11), and the processing ends.

In S10, the CPU 31 determines whether a display restriction condition of the warning image is satisfied. Here, the display restriction condition of S10 is a condition indicating a situation in which there is a high possibility that the object is specified to be located with the direct wave position specification of S4 although the object is not actually present in the area to be processed.

For example, the condition is that one or more of the following (Condition 1) to (Condition 3) are satisfied.

(Condition 1) The area to be processed is an area different from an area in which it is possible to specify that the object is located with the triangulation position specification in S2, in other words, there is an area in which it is possible to specify that the object is located with the triangulation position specification in S2 other than the area to be processed (however, the area to be processed and an azimuth with respect to the vehicle (front, right side, left side, and rear) are the same area). It is possible to specify that the object is located in the area to be processed with the direct wave position specification in S4, setting the same sensor as the sensor serving as the transmission source as the sensor serving as the transmission source in the triangulation position specification.

(Condition 2) The area to be processed is an area different from an area in which it is possible to specify that the object is located with the triangulation position specification in S2, in other words, there is an area in which it is possible to specify that the object is located with the triangulation position specification in S2 other than the area to be processed (however, the area to be processed and an azimuth with respect to the vehicle (front, right side, left side, and rear) are the same area). However, when a sensor different from the sensor serving as the transmission source in the triangulation position specification is set as the sensor serving as the transmission source, it is impossible to specify that the object is located in the same area with the triangulation position specification in S2. In the direct wave position specification in S4 in which the same sensor as the sensor set as the transmission source is set as the sensor serving as the transmission source in the triangulation position specification in which it is impossible to specify that the object is located, the object can be specified to be located in the area to be processed. A difference between a distance from the host vehicle to the position of the object specified with the triangulation position specification in S2 and a distance from the host vehicle to the position of the object specified with the direct wave position specification in S4 is less than a threshold (for example, 30 cm).

(Condition 3) The area to be processed is an area different from an area in which it is possible to specify that the object is located with the triangulation position specification in S2, in other words, there is an area in which it is possible to specify that the object is located with the triangulation position specification in S2 other than the area to be processed (however, the area to be processed and an azimuth with respect to the vehicle (front, right side, left side, and rear) are the same area). However, when a sensor different from the sensor serving as the transmission source in the triangulation position specification is set as the sensor serving as the transmission source, it is impossible to specify that the object is located in the same area with the triangulation position specification in S2. The sensor serving as the transmission source in the triangulation position specification in which the position of the object can be specified is provided at a position closer to the side surface of the vehicle relative to the sensor serving as the transmission source in the triangulation position specification in which the position of the object cannot be specified, and in the direct wave position specification in S4 in which the same sensor as the sensor set as the transmission source is set as the sensor serving as the transmission source in the triangulation position specification in which it is impossible to specify that the object is located, it is possible to specify that the object is located in the area to be processed.

Hereinafter, (Condition 1) to (Condition 3) will be described in more detail with specific examples.

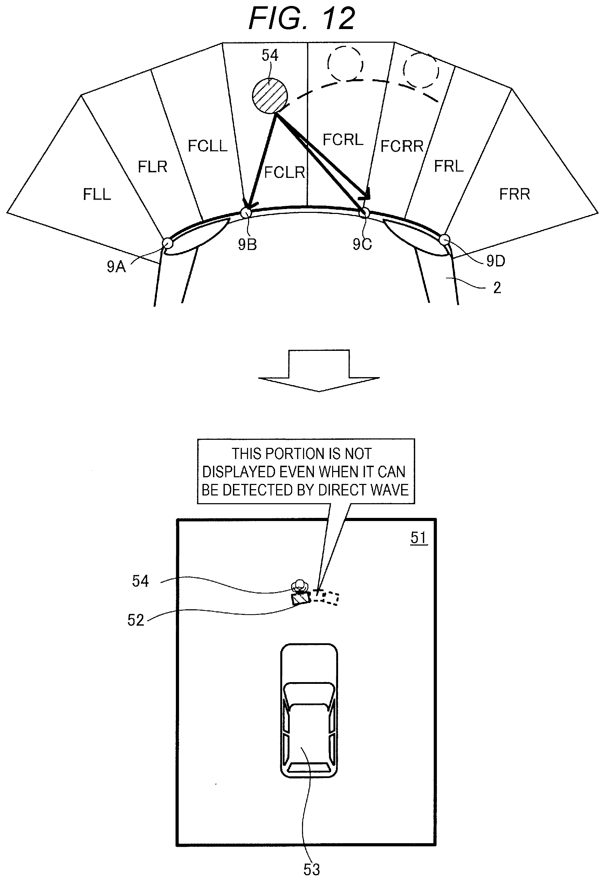

First, (Condition 1) is a condition that is often satisfied when the object 54 (for example, a utility pole, a person, or the like) having a small width and falling within one area is located as illustrated in Fig. 12. For example, as illustrated in Fig. 12, when the object 54 having a small width is located in the "FCLR", since the object 54 is located in the triangulation area 17 (Fig. 5) in which the ultrasonic sensor 9C is set as the transmission source, the position of the object 54 can be specified with the triangulation position specification in which the ultrasonic sensor 9C is set as the transmission source and the ultrasonic sensor 9B is set as a reception destination. Meanwhile, the position of the object 54 can also be specified in the direct wave position specification in which the ultrasonic sensor 9C is set as the transmission source, which is the same as the triangulation position specification, but since the distance to the object 54 can be specified but the detailed position coordinates cannot be specified in the direct wave position specification, it is specified that the object 54 is also located in the "FCRL" or the "FCRR" in the detection range of the ultrasonic sensor 9C in addition to the "FCLR". In this case, since the "FCRL" and the "FCRR" are areas in which the object 54 is not actually present, it is necessary not to display the warning image 52 in the "FCRL" and the "FCRR" to prevent erroneous guidance. Therefore, in the present embodiment, the warning image 52 is not displayed (S11) in an area satisfying (Condition 1) (YES in S10), and the processing can be implemented.

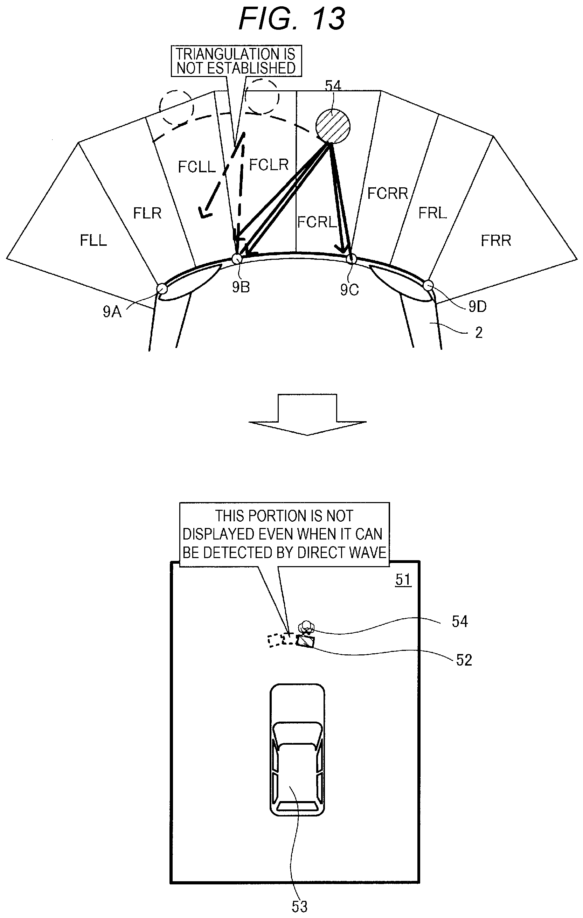

Next, (Condition 2) is a condition that is often satisfied when the object 54 (for example, a utility pole, a person, or the like) having a small width and falling within one area is located as illustrated in Fig. 13. For example, as illustrated in Fig. 13, when the object 54 having a small width is located in the "FCRL", since the object 54 is located in the triangulation area 17 (Fig. 5) in which the ultrasonic sensor 9C is set as the transmission source, the position of the object 54 can be specified with the triangulation position specification in which the ultrasonic sensor 9C is set as the transmission source and the ultrasonic sensor 9B is set as a reception destination. In contrast, since the object 54 is located outside the triangulation area 17 in which the ultrasonic sensor 9B is set as the transmission source, the position of the object 54 cannot be specified in the triangulation position specification in which the ultrasonic sensor 9B is set as the transmission source. However, since the object 54 is located in the direct wave area 18 in which the ultrasonic sensor 9B is set as the transmission source, the position of the object 54 can be specified with the direct wave position specification in which the ultrasonic sensor 9B is set as the transmission source. However, since the distance to the object 54 can be specified but detailed position coordinates cannot be specified in the direct wave position specification, it is specified that the object 54 is also located in the "FCLL" and the "FCLR" in the detection range of the ultrasonic sensor 9B in addition to the "FCRL". In this case, since the "FCLL" and the "FCLR" are areas in which the object 54 is not actually present, it is necessary not to display the warning image 52 in the "FCLL" and the "FCLR" to prevent erroneous guidance. Therefore, in the present embodiment, the warning image 52 is not displayed (S11) in an area satisfying (Condition 2) (YES in S10), and the processing can be implemented. In the example illustrated in Fig. 13, since the possibility that the object is actually present in the "FCLL" and the "FCLR" cannot be eliminated, (Condition 2) also includes that the difference between the distance to the position of the object (from the host vehicle position) specified by the triangulation position specification in which the ultrasonic sensor 9C is set as the transmission source and the ultrasonic sensor 9B is set as the reception destination and the distance to the position of the object (from the host vehicle position) specified by the direct wave position specification in which the ultrasonic sensor 9B is set as the transmission source is less than the threshold (for example, 30 cm), that is, it can be estimated that the same object in the same area is detected in both of the triangulation position specification and the direct wave position specification.

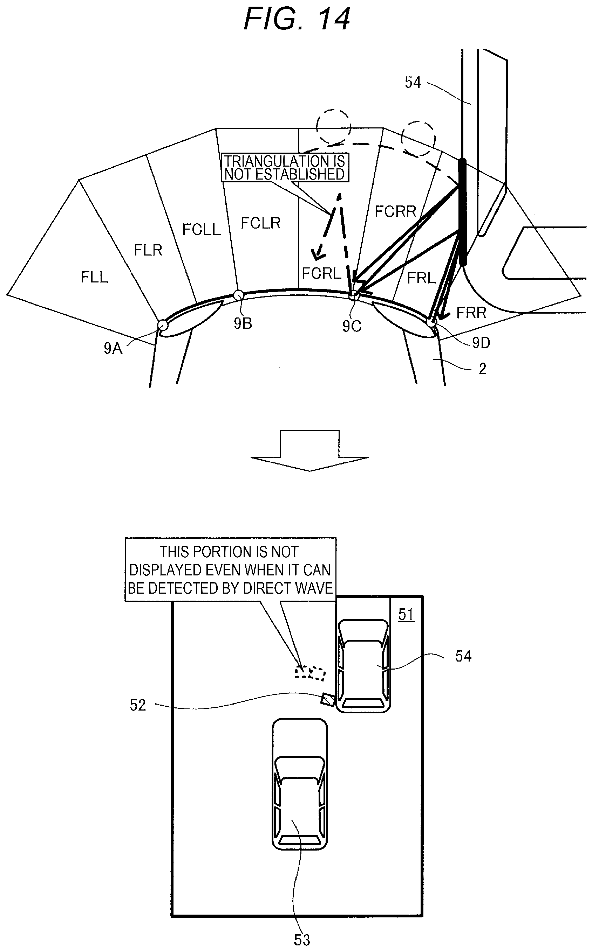

Finally, (Condition 3) is a condition that is often satisfied when the object 54 (for example, another vehicle, a wall, or the like) extending in the depth direction (the traveling direction of the host vehicle) is located on the side of the host vehicle as illustrated in Fig. 14, as an example, when the object 54 is a parked vehicle and perpendicular parking is performed next to the object 54. For example, as illustrated in Fig. 14, when the object 54 extending in the depth direction is located at the "FRL", since the object 54 is located in the triangulation area 17 (Fig. 5) in which the ultrasonic sensor 9D is set as the transmission source, the position of the object 54 can be specified with the triangulation position specification in which the ultrasonic sensor 9D is set as the transmission source and the ultrasonic sensor 9C is set as the reception destination. In contrast, regarding the ultrasonic sensor 9C located closer to the center of the vehicle relative to the ultrasonic sensor 9D, since the object 54 is located outside the triangulation area 17, the position of the object 54 cannot be specified with the triangulation position specification in which the ultrasonic sensor 9C is set as the transmission source. However, since the object 54 is located in the direct wave area 18 in which the ultrasonic sensor 9C is set as the transmission source, the direct wave position specification in which the ultrasonic sensor 9C is set as the transmission source is enabled. However, since the distance to the object 54 can be specified but detailed position coordinates cannot be specified in the direct wave position specification, it is specified that the object 54 is also located in the "FCRR" and the "FCRL" in the detection range of the ultrasonic sensor 9C in addition to the "FRL". In this case, since the "FCRR" and the "FCRL" are areas in which the object 54 is not actually present, it is necessary not to display the warning image 52 in the "FCRR" and the "FCRL" to prevent erroneous guidance. Therefore, in the present embodiment, the warning image 52 is not displayed (S11) in an area satisfying (Condition 3) (YES in S10), and the processing can be implemented. Since the object 54 extending in the depth direction (the traveling direction of the host vehicle) on the side of the host vehicle is also a condition, (Condition 3) also includes that a sensor (the ultrasonic sensor 9D in Fig. 14) with which the position of the object 54 can be specified in the triangulation position specification is located closer to the side surface of the vehicle relative to a sensor (the ultrasonic sensor 9C in Fig. 14) with which the position of the object 54 cannot be specified in the triangulation position specification.

If the area to be processed does not satisfy any of the above (Condition 1) to (Condition 3) (NO in S10), since it is estimated that the object is located in the area to be processed among the plurality of areas obtained by dividing the surroundings of the vehicle, the CPU 31 displays the warning image 52 on the liquid crystal display 4 as illustrated in Fig. 11 to notify the user of the presence of the object in a predetermined target area. Specifically, the warning image 52 is superimposed and displayed in the surrounding image of the surroundings of the vehicle displayed on the liquid crystal display 4 at the position at which the object is specified by the direct wave position specification in S4. In addition to the display of the warning image, a warning sound may be output. Since the details are the same as those of S6, the description thereof will be omitted.

As described above in detail, according to the driving assistance device 1 and the computer program executed by the driving assistance device 1 according to the present embodiment, when the position of the object can be specified in any of the plurality of areas by the specification (S2) of the position of the object using the triangulation, the warning image 52 based on a specification result of the position of the object using a direct wave is restricted so as not to be displayed under any of the above (Condition 1) to (Condition 3) in an area different from the area in which it is possible to specify that the object is located by the specification (S2) of the position of the object using the triangulation even when it is possible to specify that the object is located only the specification (S4) of the position of the object using the direct wave. Here, there is a possibility of the following (A) or (B) when the object cannot be specified to be located in the specification (S2) of the position of the object using the triangulation and can be specified to be located only by the specification (S4) of the position of the object using the direct wave. (A) Although the object is actually present in the corresponding area, since it is difficult to perform position detection by the triangulation in the area, the position of the object cannot be detected by the triangulation. On the other hand, the position of the object can be detected because the object is present in a detectable area in the detection using only a direct wave. (B) The object is not actually present in the corresponding area. Since the object is not actually present, the position of the object cannot be detected using the triangulation. On the other hand, in the detection using only the direct wave, an object in another area is detected, and since the areas in which the objects are located cannot be narrowed down to one, it is detected that the object is also located in the area.

In the case of the above (A), it is desirable to issue a warning of the object to the corresponding area, whereas in the case of the above (B), it is desirable not to issue a warning of the object to the corresponding area. In the present embodiment, by setting the conditions of (Condition 1) to (Condition 3), the display of the warning image 52 in the corresponding area is restricted so as not to be performed in a situation where the presence of the object is suspicious as in (B), and thus it is possible to issue a more accurate warning to the user.

Since (Condition 1) is a condition that the same sensor is the sensor serving as the transmission source and it is possible to specify that the object is located only by the specification (S4) of the position of the object using the direct wave in the area different from the area in which it is possible to specify that the object is located by the specification (S2) of the position of the object using the triangulation, it is possible to invalidate the erroneous information about the object generated by using the same sensor and different detection methods as illustrated in Fig. 12.

Since (Condition 2) is a condition that the position of the object can be specified in the specification (S2) of the position of the object using the triangulation when a certain sensor is the detection sensor serving as the transmission source, the position of the object cannot be specified in the specification (S2) of the position of the object using the triangulation when another sensor different from the certain sensor is the detection sensor serving as the transmission source, another sensor is the detection sensor serving as the transmission source and it is possible to specify that the object is located in an area different from the area in which it is possible to specify that the object is located only by the specification (S4) of the position of the object using the direct wave, and the difference between the distance from the host vehicle to the position of the object specified in the specification (S2) of the position of the object using the triangulation and the distance to the position from the host vehicle to position of the object similarly specified in the specification (S4) of the position of the object using the direct wave is less than the threshold, it is possible to invalidate erroneous information about the object generated when using different sensors to detect the same object as illustrated in Fig. 13.

Since (Condition 3) is a condition that the position of the object can be specified in the specification (S2) of the position of the object using the triangulation when a certain sensor is the detection sensor serving as the transmission source, but the position of the object cannot be specified in the specification (S2) of the position of the object using the triangulation when another sensor on the center side of the vehicle relative to a certain sensor is the detection sensor serving as the transmission source, and another sensor is the detection sensor serving as the transmission source and it is possible to specify that the object is located only by the specification (S4) of the position of the object using the direct wave in an area different from the area in which it is possible to specify that the object is located, it is possible to invalidate that the warning about the object is issued more than necessary in the traveling direction of the vehicle when there is an object extending in the traveling direction of the vehicle on the side of the vehicle as illustrated in Fig. 14.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

For example, in the present embodiment, the warning about the object by the driving assistance processing program illustrated in Fig. 9 is always performed while the vehicle is traveling, but may be performed only when the vehicle is traveling by autonomous driving assistance. Alternatively, the warning may be performed only when the vehicle performs the parking assistance, which is one type of the autonomous driving assistance.

Further, in the present embodiment, four ultrasonic sensors 9A to 9D that detect the object are provided on the front surface of the vehicle 2, but the number of ultrasonic sensors is not necessarily four as long as it is plural, and may be, for example, two. The positions and shapes of the triangulation area 17 and the direct wave area 18 vary depending on the number and arrangement of the ultrasonic sensors.

In the present embodiment, as the surrounding image indicating the surroundings of the vehicle, the overhead image generated from the captured images captured by the front camera 6, the rear camera 7, and the side cameras 8A and 8B may be displayed on the liquid crystal display 4, and when the warning image 52 about the object is displayed, the warning image 52 is superimposed and displayed on the overhead image (in Fig. 11). The bird's-eye view image viewed obliquely downward may be generated instead of the overhead image, and the warning image 52 may be superimposed and displayed on the bird's-eye view image. The vehicle surrounding image displayed on the liquid crystal display 4 may be the captured image itself captured by the camera. For example, the captured image of the front camera 6 may be used.

The surrounding image displayed on the liquid crystal display 4 may be a virtual landscape image (for example, a map image) that is schematically generated instead of the captured image captured by the camera. Only the host vehicle image 53 and the warning image 52 may be displayed without displaying the surrounding image.

In the present embodiment, the processing of the driving assistance processing program (Fig. 9) is executed by the driving assistance ECU 10 of the driving assistance device 1, and an execution entity can be changed as appropriate. For example, a control unit of the liquid crystal display 4, a vehicle control ECU, a control unit of a navigation device, and other in-vehicle devices may execute the processing.

## Claims

1. A driving assistance device (1) comprising:
a plurality of detection sensors (9A to 9L) that are respectively provided in different locations of a vehicle (2) and are in such a positional relationship that the plurality of detection sensors are able to transmit probe waves to surroundings of the vehicle and receive from each other received waves including reflected waves of the probe waves reflected by an object (15) around the vehicle;
a surrounding image display unit (10) configured to display a surrounding image (51) indicating the surroundings of the vehicle on a display device (4);
a first object position specifying unit (10) configured to specify a position of the object by triangulation using a first detection distance calculated by a detection sensor serving as a transmission source receiving the reflected wave of the probe wave as a direct wave and a second detection distance calculated by another detection sensor different from the detection sensor serving as the transmission source receiving the reflected wave of the probe wave as an indirect wave;
a second object position specifying unit (10) configured to specify the position of the object based on the first detection distance;
an object determination unit (10) configured to divide the surroundings of the vehicle into a plurality of areas for each direction with a current position of the vehicle as a center, and determine whether the object specified by the first object position specifying unit and the second object position specifying unit is located in each of the plurality of divided areas; and
a warning image display unit (10) configured to display, in the surrounding image, a warning image indicating that the object is located in an area in which the object is determined to be located by the object determination unit, wherein
when the position of the object is specified in any of the plurality of areas by the first object position specifying unit, the warning image display unit does not display the warning image based on a specification result of the second object position specifying unit under a predetermined condition for an area different from an area in which the object is specified to be located by the first object position specifying unit even when the object is specified to be located only by the second object position specifying unit.

2. The driving assistance device according to claim 1, wherein
when the detection sensor serving as the transmission source when the position of the object is specified in any of the plurality of areas by the first object position specifying unit is set as a first sensor,
the predetermined condition is a condition that the first sensor is the detection sensor serving as the transmission source and the object is specified to be located only by the second object position specifying unit in the area different from the area in which the object is specified to be located by the first object position specifying unit.

3. The driving assistance device according to claim 1, wherein
when the detection sensor serving as the transmission source when the position of the object is specified in any of the plurality of areas by the first object position specifying unit is set as a first sensor, and a detection sensor different from the first sensor is set as a second sensor,
the predetermined condition is a condition that the position of the object is specified by the first object position specifying unit when the first sensor is the detection sensor serving as the transmission source, the position of the object is not specified by the first object position specifying unit when the second sensor is the detection sensor serving as the transmission source, the second sensor is the detection sensor serving as the transmission source and the object is specified to be located only by the second object position specifying unit in the area different from the area in which the object is specified to be located by the first object position specifying unit, and a difference between a distance to the position of the object specified by the first object position specifying unit and a distance to the position of the object specified by the second object position specifying unit is less than a threshold.

4. The driving assistance device according to claim 1, wherein
when the detection sensor serving as the transmission source when the position of the object is specified in any of the plurality of areas by the first object position specifying unit is set as a first sensor, and a detection sensor different from the first sensor is set as a second sensor,
the predetermined condition is a condition that the position of the object is specified by the first object position specifying unit when the first sensor is the detection sensor serving as the transmission source, the position of the object is not specified by the first object position specifying unit when the second sensor is the detection sensor serving as the transmission source, the first sensor is provided on a position closer to a side surface of the vehicle relative to the second sensor, and the second sensor is the detection sensor serving as the transmission source and the object is specified to be located only by the second object position specifying unit in the area different from the area in which the object is specified to be located by the first object position specifying unit.
